Europäisches Patentamt

European Patent Office

Office européen des brevets

(19)

(11) **EP 1 617 107 A2**

(12) **EUROPEAN PATENT APPLICATION**

(43) Date of publication:
18.01.2006 Bulletin 2006/03

(51) Int Cl.:
*F16H 61/32* (2006.01)   *F16H 59/10* (2006.01)

(21) Application number: 05291425.6

(22) Date of filing: 30.06.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 14.07.2004 JP 2004207726

(71) Applicant: Calsonic Kansei Corporation
Tokyo 164-8602 (JP)

(72) Inventors:
• Osamura, Kensuke,c/o Calsonic Kansei
Corporation
Tokyo 164-8602 (JP)
• Hirota, Yukitsugu,c/o Calsonic Kansei
Corporation
Tokyo 164-8602 (JP)
• Shimamura, Yuzo,c/o Calsonic Kansei
Corporation
Tokyo 164-8602 (JP)
• Nagano, Masaharu,c/o Calsonic Kansei
Corporation
Tokyo 164-8602 (JP)

(74) Representative: Intes, Didier Gérard André et al
Cabinet Beau de Loménie,
158, rue de l'Université
75340 Paris Cedex 07 (FR)

(54) **Operating mode select device for automatic transmission**

(57)    An operating position select device (100) has a select lever unit (1), a mode shift unit (300) to shift operation modes of the automatic transmission (19), a mechanically connecting means (8, 10, 12, 13, 18) connecting them, and an assist actuator (9) controlled be a control unit (22) to assist a select lever (2). The control unit (22) includes an improper-halt judging part (33) for judging an improper halt of the lever based on an operating position, a basic target reaction-force setting part (35) for setting a basic target reaction-force based on the operating position, a target reaction-force compensating part (34) for computing a reaction-force compensation-amount based on the improper-halt state and the operating position, a target reaction-force computing part (36) for computing a target reaction-force based on the basic target reaction-force and reaction-force compensation-amount, and an assist force computing part(37) for computing an assist force based on the target reaction-force and operating force.

FIG. 4

## Description

The present invention relates to an operating position select device for an automatic transmission by which a driver can select by operating a select lever one of select mode positions corresponding to a plurality of operation modes of the automatic transmission.

An operating position select device for an automatic transmission of this kind is disclosed in Japanese patent laying-open publication (Tokkaihei) No. 9-323559. This select device includes a select lever unit disposed near a driver's seat in a passenger compartment and a mode shift unit mounted on an automatic transmission. The select lever unit has a select lever manually operated by a driver and is connected with the mode shift unit by a connecting mechanism, such as a control cable, or a connecting linkage, which transmits an operating force applied on the select lever by the driver to the mode shift unit to shift operation modes of the automatic transmission.

The conventional art, however, has a problem that the select lever unit needs a long select lever in order to operate it without a large operating force of the driver, which reduces design freedom concerning an installation location of the select lever unit and/or a layout of a passenger compartment.

This reason comes from the fact that a length of the select lever is determined so that a driver can easily operate the select lever and its operating torque must overcome frictional resistance of the connecting mechanism and the like. Namely, the operating torque, generated by the operating force on the select lever, has to be larger than torque caused by the sum of the frictional resistance in the connecting mechanism and resistance generated when a detent pin, which moves with the select lever, gets over a cam top portion of a detent plate during select operation, although the operating force of the driver is limited to a certain extent. Accordingly, to satisfy both of the above requirements the select lever needs to be longer than a certain length, typically to be 350 mm.

Another operating position select device for an automatic transmission of this kind is disclosed in Japanese patent laying-open publication (Tokkai) No. 2003-97694. This select device is, what is called, a shift-by-wire type. It has a select lever manually operated by a driver, a select position detector for detecting a position of the select lever, a mode shift unit mounted on an automatic transmission for shifting its operation modes, an electric motor for driving a mode shift unit, and a control unit for controlling the electric motor based on an output signal from the detector.

This select device is suitable for shortening a length of the select lever and expanding design freedom for its installation location and/or layout of a passenger compartment, while the select device lacks a mechanical connection between the select lever and the mode shift unit. This lack of the mechanical connection results in a problem that the mode shift unit can not be sifted despite of operating the select lever in case of electrical failure such that an electric wire is broken, or the select position detector or the control unit fails.

It is, therefore, an object of the present invention to provide an operating position select device for an automatic transmission which overcomes the foregoing drawbacks and can expand design freedom concerning layout of a passenger compartment and/or an installation location of a select lever unit, and drive a mode shift unit despite of electric failure of the operating position select device, while providing favorable select-lever operating feeling in a select operation.

According to the first aspect of the present invention there is provided an operating position select device for an automatic transmission whose operation modes are shiftable, the operating position select device comprising: a select lever unit having a select lever that is operated by a driver between a plurality of select positions corresponding to the operation modes; an operating position sensor that detects an operating position of the select lever and outputs an operating position signal; an operating force sensor that detects operating force applied to the select lever and outputs an operating force signal; a mode shift unit mounted on the automatic transmission to shift operation modes of the automatic transmission; a mechanically connecting means that mechanically connects the select lever and the mode shift unit with each other; an assist actuator that is arranged between the select lever and the mode shift unit and supplies assist force to the shift lever; and a control unit that controls the assist actuator, the control unit including an improper-halt judging part that judges an improper halt of the select lever between the adjacent select positions based on the operating position signal and outputs an improper-halt signal, a basic target reaction-force setting part that sets a basic target reaction-force based on the operating position signal and outputs a basic target reaction-force signal, a target reaction-force compensating part that computes a reaction-force compensation-amount based on the improper-halt signal and the operating position signal and outputs a reaction-force compensation-amount signal, a target reaction-force computing part that computes a target reaction-force based on the basic target reaction-force signal and the reaction-force compensation-amount signal and outputs a target reaction-force signal, and an assist force computing part that computes an assist force of the assist actuator based on the target reaction-force signal and the operating force signal.

According to the second aspect of the present invention there is provided an operating position select device for an automatic transmission whose operation modes are shiftable, the operating position select device comprising: a select lever unit having a select lever that is operated by a driver between a plurality of select positions corresponding to the operation modes; an operating position sensor that detects an operating position of the select lever and outputs an operating position signal; an operating force sensor that detects operating force applied to the select lever and outputs an operating force signal; a mode shift unit mounted on the automatic transmission to shift operation modes of the automatic transmission; a mechanically connecting means that mechanically connects the select lever and the mode shift unit with each other; an assist actuator that is arranged between the select lever and the mode shift unit and supplies assist force to the shift lever; and a control unit that controls the assist actuator, the control unit including an improper-halt judging part that judges an improper halt of the select lever between the adjacent select positions based on the operating position signal and outputs an improper-halt signal, an input operating-force compensating part that computes an operating-force compensation-amount based on the improper-halt signal and the operating position signal and outputs an operating-force compensation-amount signal, a second operating-force computing part that computes a second operating-force based on the operating force signal and the operating-force compensation-amount signal and outputs a second operating-force signal, and an assist force computing part that computes an assist force of the assist actuator based on the target reaction-force signal and the second operating-force signal.

The objects, features and advantages of the present invention will become apparent as the description proceeds when taken in conjunction with the accompanying drawings, in which:

FIG 1 is a schematic diagram showing a structure of an automatic transmission with an operating position select device of a first embodiment according to the present invention;

FIG 2 is an enlarged perspective view showing an assist actuator that is used in the operating position select device shown in FIG 1;

FIG 3 is an enlarged perspective view showing a mode shift unit that has a detent mechanism and is used in the operating position select device shown in FIG 1;

FIG 4 is a control bock diagram of a control unit and its peripheral equipment that are used in the operating position select device shown in FIG 1;

FIG 5 is a flowchart of an assist control executed in the control unit shown in FIG 4 for controlling the assist actuator during a select operation;

FIG 6 is a characteristic diagram showing relationships of operating reaction force acting on a select lever and a cam profile of a detent mechanism with respect to an operating angle of the select lever, when the select lever is shifted from a position P to a position R without assist force outputted from the assist actuator;

FIG 7 is a characteristic diagram showing a relationship between the operating angle and target reaction force;

FIG 8 is a target select-position table that is provided in a target select-position computing part of the control unit;

FIG 9 is a flowchart of an improper-halt preventing control executed by the control unit;

FIG 10 is a time chart showing a state of an operating position and operating force during a select operation from the position P to the position R with an improper halt of the select lever;

FIG 11 is a control bock diagram of a control unit and its peripheral equipment that are used in an operating position select device of a second embodiment according to the present invention;

FIG 12 a flowchart of an assist control executed in the control unit shown in FIG 11 for controlling an assist actuator during a select operation;

FIG 13 is a flowchart of an improper-halt preventing control executed by the control unit; and

FIG 14 is a time chart showing a state of an operating position and operating force during a select operation from the position P to the position R with an improper halt of the select lever.

Throughout the following detailed description, similar reference characters and numbers refer to similar elements in all figures of the drawings, and their descriptions are omitted for eliminating duplication.

An operating position select device of a first preferred embodiment according to the present invention will be described with reference to the accompanying drawings.

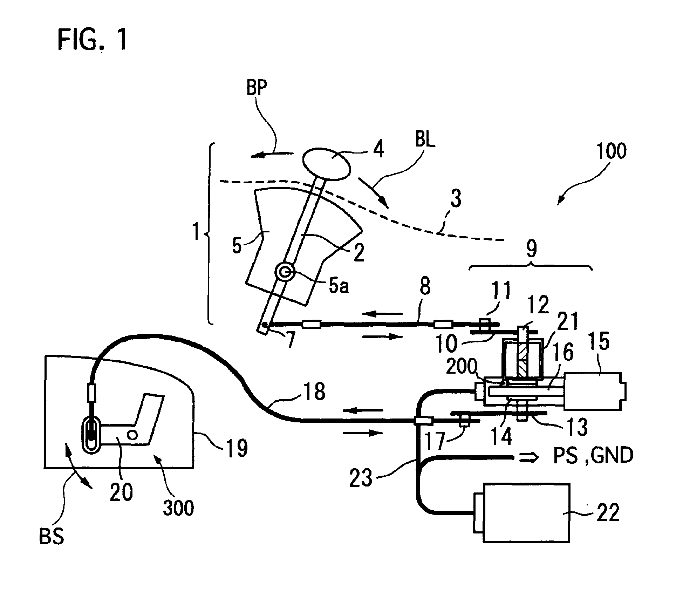

Referring to FIG 1 of the drawing, there is shown an automatic transmission 19 and an operating position select device 100 to control the transmission 19.

The automatic transmission 19 is a conventional multi-speed transmission with a plurality of planetary gear sets, not shown, and is operatable among a plurality of operation modes, for example, a parking mode, a reverse drive mode, a neutral mode, a forward drive mode, and a forward low gear drive mode.

The automatic transmission 19 is provided with the operating position select device 100, which shifts the operation modes to a desired operation mode by manually selecting a select lever 2 of the select device 100.

The operating position select device 100 includes a select lever unit 1 manually operated by a driver, a mode shift unit 300 mounted on the automatic transmission 19, a first and second control cables 8 and 18 connecting the select lever 2 to the mode shift unit 300, an operating angle sensor 200 for detecting an operating angle of the select lever 2, an assist actuator 9 for assisting operating force inputted from the select lever 2 by the driver, an operating torque sensor 21 for detecting actual operating force applied to the select lever 2, and a control unit 22 for controlling the assist actuator 9.

The select lever unit 1 is arranged, for example, at a center console 3 beside a driver's seat and has the select lever 2 operated by the driver, a bracket 5 fixed to a vehicle body, a supporting shaft 5a fixed on the bracket 5 so as to swingably support the select lever 2, a knob 4 mounted on the top of the select lever 2 so as to be held by a hand of the driver, and a checking mechanism, not shown, for ensuring the select lever 2 to be kept in a selected mode position.

The select lever 2 is set to be approximately 100 mm in length in this embodiment, which is shorter by approximately 250 mm than a conventional type select lever. The lever 2 is operatable by the driver swingably in a first direction toward a P position as indicated by an arrow $B_P$ and in a second direction, opposite to the first direction, toward an L position as indicated by an arrow $B_L$.

The select lever 2 can be positioned in one of select positions: the P position corresponding to the parking mode of the automatic transmission 19, an R position corresponding to the reverse drive mode, an N position corresponding to the neutral mode, a D position corresponding to the forward drive mode, and the L position corresponding to the forward low geared drive mode.

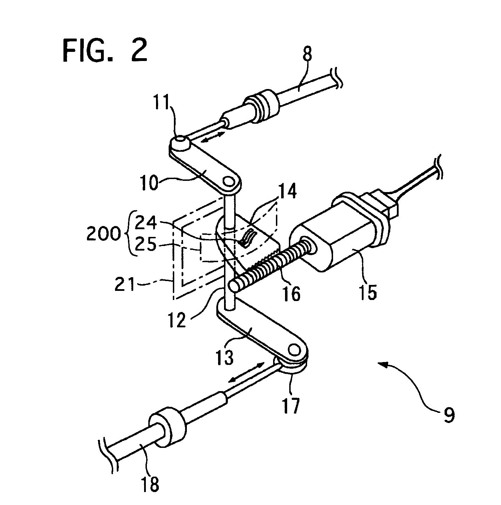

The assist actuator 9, as shown in FIGS. 1 and 2, includes an electric motor 15 with reduction gears for reducing rotation speed of an output shaft of the motor 15, a worm 16 formed on the outer peripheral surface of the output shaft, and a worm wheel 14 meshing with the worm 16 and integrally united to the coupling shaft 12 for coupling the first and second control cables 8 and 18.

The worm wheel 14 is provided on its upper surface with an electric terminal 24 contacting to a carbon resistor 25, indicated by a dashed line in FIG 2, that is printed on a substrate fixed to a case of the assist actuator 9. The electric terminal 24 and the carbon resistor 25 constitute the operating angle sensor 200 for detecting an operating angle of the select lever 2 to output an operating angle signal to the control unit 22.

The electric terminal 24 is movable together with and around the coupling shaft 12 to change its position with respect to the carbon resistor 25 that is immobile, so that the operating angle sensor 200 can detect a rotating angle of the coupling shaft 12 and output the operating angle signal that is, for example, proportional to the operating angle of the select lever 2. The operating angle signal is set to increase as the select lever 2 moves toward the L position, in the second direction BL. The operating angle sensor 200 acts as an operating position sensor of the present invention, and the operating angle signal corresponds to an operating position signal of the present invention.

There is provided the operating torque sensor 21 attached to the coupling shaft 12 so as to detect the operating force applied to the select lever 2. Since the operating force is proportional to operating torque applied to the coupling shaft 12, the torque sensor 21 detects the operating force based on relative torsion amount between the upper and lower portions of the coupling shaft 12 and outputs an operating force signal to the control unit 22. The operating force signal, for example, increases with the operating force applied to the select lever 2. The torque sensor 21 acts as an operating force sensor of the present invention.

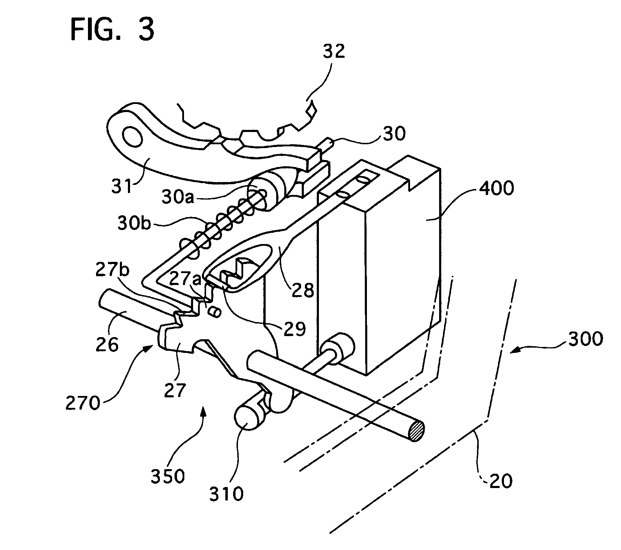

The mode shift unit 300 shifts the operation modes of the automatic transmission 19 according to an operated position of the select lever 2. Referring to FIGS. 1 and 3 of the drawings, the mode shift unit 300 has a manual plate lever 20 and a detent mechanism 350 for keeping the manual plate lever 20 in a position selected by the select lever 2.

The manual plate lever 20 is integrally fixed in its intermediate portion with a rotary shaft 26, and connected at its one end portion with the second control cable 18 so as to be rotated on the shaft 26 with respect to a transmission case of the transmission 19 according to a select operation of the select lever 2. The rotary shaft 26 is fixed to a detent plate 27 of the detent mechanism 350.

The detent mechanism 350 includes the detent plate 27 with a cam 270, a detent pin 29 to be pressed onto the cam 270, and a spring plate 28 acting its spring force on the detent pin 29.

The detent plate 27 is mechanically connected with a valve spool 310 of a manual valve disposed in a control valve unit 400 of the automatic transmission 19 so as to move the spool 300 according to a select position. The detent plate 27 is formed on its upper portion with the cam 270 having top portions 27a and bottom portions 27b. Each bottom portion 27b is arranged between the adjacent top portions 27a and corresponds with one of the five operation modes of the automatic transmission 19.

The cam 270 is pressed by the detent pin 29 that is urged by the spring plate 28. The spring plate 28 is mounted at its one end portion on the control valve unit 400 and supports the detent pin 29 at its other end portion. The spring plate 28 presses the detent pin 29 onto the cam 270 of the detent plate 27 so that the detent pin 29 is positioned in one of the bottom portions 27b to detain the valve spool 310 of the manual valve in the selected position.

The detent plate 27 is coupled at its cam side portion with a parking rod 30 having a wedge 30a that can press a parking pawl 31. The wedge 30a is movable along the rod 30 and presses the parking pawl 31 by spring force of a coil spring 30b so that the pawl 31 engages with a parking wheel 32 united to an output shaft of the automatic transmission 19 when the select lever 2 is shifted to the P position. This engagement of the pawl 31 and the wheel 32 results in locking drive wheels, not shown, for parking a motor vehicle.

The mode shift unit 300 is mechanically connected with the select lever 2 through the first and second control cables 8 and 18, and others. As shown in FIGS. 1 and 2, the first control cable 8 connects at its one end portion with a bottom portion of the select lever 2 through a first joint 7 and at the other end portion with one end portion of an input lever 10 through a second joint 11. The other end portion of the input lever 10 is connected with a top portion of a coupling shaft 12, whose bottom portion is connected with one end portion of an output lever 13. The other end portion of the output lever 13 is connected with one end portion of the second control cable 18 through a third joint 17. The other end portion of the second control cable 18 is, as shown in FIGS. 1 and 3, connected with the manual plate lever 20.

The first and second control cables 8 and 18, the first to third joints 7, 11, and 17, the input and output plates 10 and 13, and the coupling shaft 12 act as a mechanically connecting means of the present invention.

The control unit 22 is electrically connected to a power supply PS, ground GND, the operating angle sensor 200, and the torque sensor 21. The control unit 22 receives the operating angle signal from the operating angle sensor 200 and the operating force signal from the torque sensor 21 so as to compute target assist current based on these signals, and drives the electric motor 15 under pulse width modulation (PWM) control based on the target assist current.

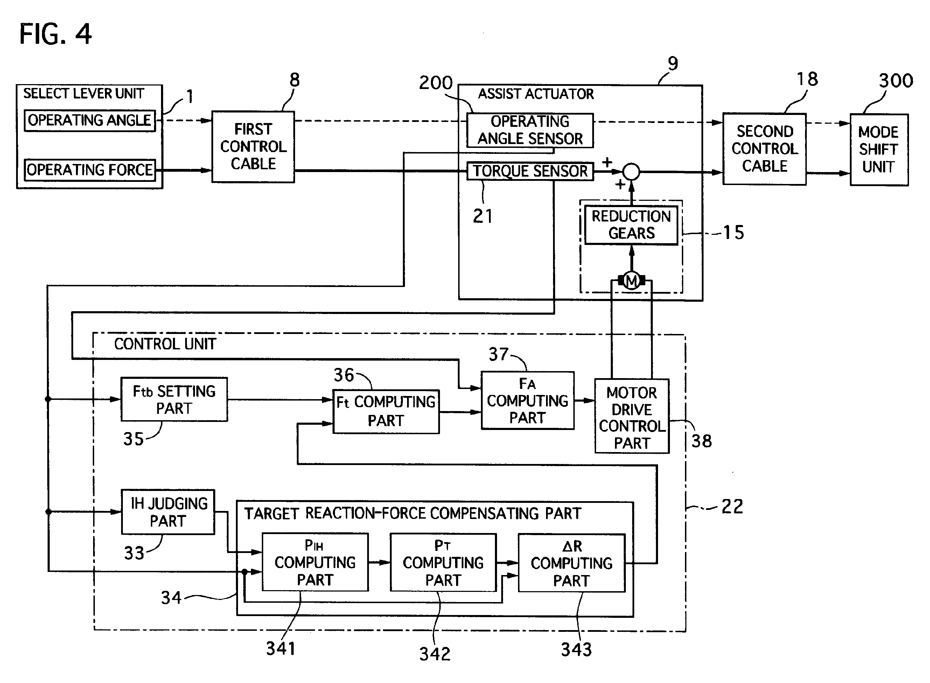

FIG 4 shows a control block diagram of the control unit 22 and its related units. When the select lever 2 is shifted by a driver, the select lever 2 moves and changes its operating angle, and operating force applied to the lever 2 by the driver is transmitted to the mode sift unit 300 through the first and second control cables 8 and 18, and the coupling shaft 12.

The first control cable 8 rotates the coupling shaft 12, so that the terminal 24 on the worm wheel 14 united with the shaft 12 moves with respect to the carbon resistance 25 to change a relative angle between them. This relative angle, corresponding to an operating angle of the select lever 2, is detected by the operating angle sensor 200, which outputs an operating angle signal to the control unit 22.

Operating force applied to the select lever 2 is transmitted through the first control cable 8 to the coupling shaft 12 and twists it, so that torsion occurs between the upper and lower portions of the shaft 12. This torsion, corresponding to operating force applied to the select lever 2, is detected by the torque sensor 21, which outputs an operating force signal to the control unit 22.

The control unit 22 includes an improper-halt judging part 33, a target reaction-force compensating part 34, a basic target reaction-force setting part 35, a target reaction-force computing part 36, an assist-force computing part 37, and a motor drive control part 38.

The improper-halt judging part 33 is electrically connected to the operating angle sensor 200 and judges an improper-halt (IH) of the select lever 2 based on an operating angle signal from the operating angle sensor 200 to output an improper-halt signal. The judgment part 33 judges the lever 2 to be in an improper-halt position when an operating position, corresponding to an operating angle, deviates from a select position P, R, N, D, or L and the lever 2 is kept halted for more than a predetermined period. This predetermined period is set to be a few seconds for example.

The target reaction-force compensating part 34 includes an improper-halt position computing part 341, a target select-position computing part 342, and a reaction compensation-amount computing part 343.

The improper-halt position computing part 341 is electrically connected to the improper-halt judging part 33 and the operating angle sensor 200 to receive the improper-halt signal and the operating angle signal, respectively. The position computing part 341 computes an improperly halted operating position $P_{IH}$ obtained at time when an improper-halt is judged by the improper-halt judging part 33, and outputs an improperly halted operating position signal.

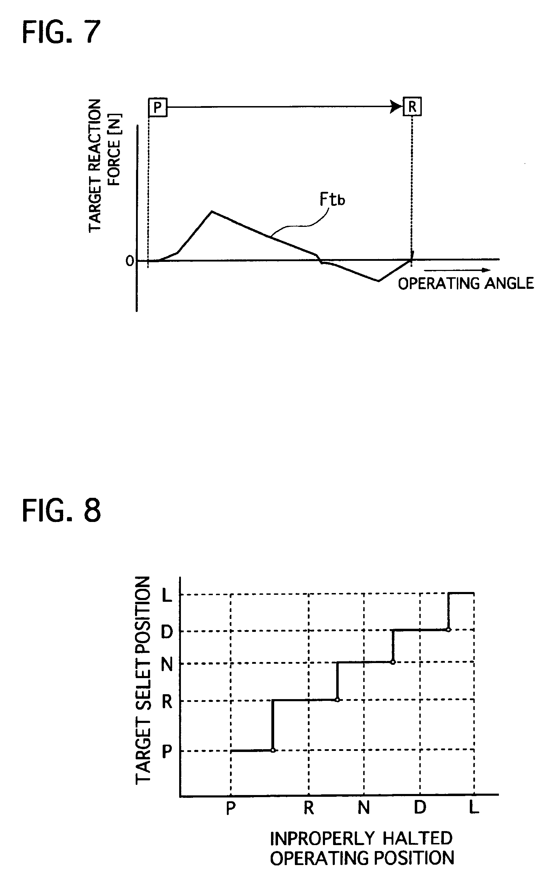

The target select-position computing part 342 receives the improperly halted operating position signal from the improper-halt position computing part 341 and determines a target select-position $P_T$ to output a target select-position signal. The target select-position is set based on the improperly halted operating position $P_{IH}$ by using a target select-position table shown in FIG 8, which will be described in detail later.

The reaction compensation-amount computing part 343 receives the target select-position signal from the target select-position computing part 342 and the operating angle signal from the operating angle sensor 200 and computes a reaction compensation-amount $\Delta R$ for reducing a difference between the target select-position and the operating position to output a reaction compensation-amount signal.

The basic target reaction-force setting part 35 is electrically connected to the operating angle sensor 200 and sets a basic target reaction-force Ftb, by using a basic target reaction-force table having data on a characteristic of ideal reaction force as shown in FIG 7, to output a basic target reaction-force signal.

The target reaction-force computing part 36 receives the basic target reaction-force signal from the basic target reaction-force setting part 35 and the reaction compensation-amount signal from the reaction compensation-amount computing part 343 and adds them to each other to obtain a target reaction-force Ft, then outputting a target reaction-force signal.

The assist force computing part 37 receives an operating force signal from the torque sensor 21 and the target reaction-force signal from the target reaction-force computing part 36 and computes an assist force $F_A$ based on an operating force F and the target reaction-force Ft, then outputting an assist force signal. An assist force ($F_A$) value iFa is computed by the following equation, for example.

$$iFa = kp \, (rFs - tFs) + ki \int (rFs - tFs) \, dt$$

where tFs is a target reaction-force (Ft) value, rFs is an operating force (F) value, kp is a proportional gain, and Ki is an integral gain.

The motor drive control part 38 receives the assist force signal from the assist force part 37 and outputs motor drive current determined based on the assist force signal to the motor 15 so that the motor 15 generates assist force under Power Width Modulation (PWM) control. Accordingly, the motor 15 applies motor torque to the coupling shaft 12 to assist the operating force. In stead of the PMW control, the motor 15 may be driven under other controls, such as current control or armature voltage control.

In the select device 100, when the operating position select unit 100 fails electrically because of a broken electric wire for example, the operating force of the select lever 2 is directly transmitted from the lever 2 to the mode shift unit 300 mechanically through the first and second control cables 8 and 18, the input and output levers 10 and 13 and the others. Accordingly, the mode shift unit 300 is driven to shift the modes of the automatic transmission 19, although its operating force becomes larger than that in a normal state.

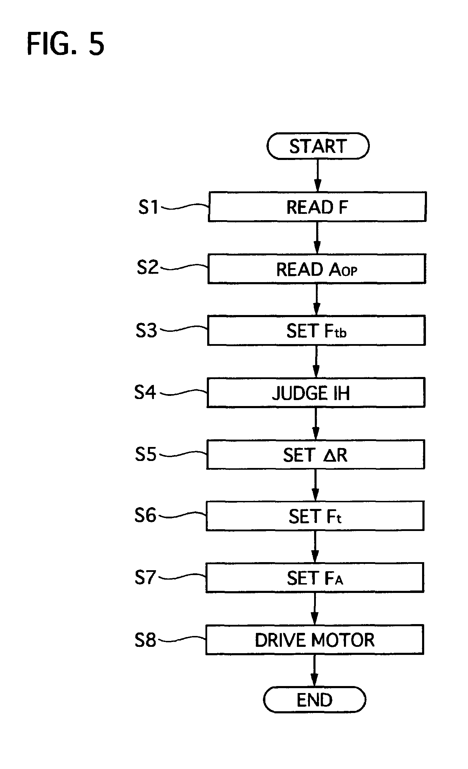

FIG 5 shows a flowchart of an assist process executed in the control unit 22 in order to control the assist actuator 9 when the select lever 2 is operated by a driver.

At step S1, the assist force computing part 37 receives an operating force signal from the torque sensor 21 to read operating force F, and then the flow goes to step S2.

At the step S2, the improper-halt judging part 33, the target reaction-force compensating part 34, and the basic target reaction-force setting part 35 receives an operating angle signal from the operating angle sensor 200 to read an operating angle $A_{OP}$. Then, the flow goes to step 3.

At the step S3, the basic target reaction-force setting part 35 sets basic target reaction-force Ftb based on the operating angle AOP and outputs a basic target reaction-force signal to the target reaction-force computing part 36. Then, the flow goes to step S4.

At the step S4, the improper-halt judging part 33 receives the operating angle signal and judges whether or not the select lever 2 is improperly halted based on the operating position Po and time $T_M$ counted by a not-shown timer, which will be described in detail later. It outputs an improper-halt signal when it judges an improper-halt. Then, the flow goes to step S5.

At the step S5, the target reaction-force compensating part 34 receives the improper-halt signal from the improper-halt judgment part 33 and the operating angle signal from the operating angle sensor 200 and sets a reaction compensation-amount ΔR, outputting a reaction compensation-amount signal. Then, the flow goes to step S6.

At the step S6, the target reaction-force computing part 36 receives the basic target reaction-force signal from the basic target reaction-force setting part 35 and the reaction compensation-amount signal from the reaction compensation-amount computing part 343 and sets a target reaction-force Ft, outputting a target reaction-force signal. Then, the flow goes to step S7.

At the step S7, the assist force computing part 37 receives an operating force signal from the torque sensor 21 and the target reaction force signal from the target reaction-force computing part 36 and sets an assist force $F_A$, outputting an assist force signal. Then, the flow goes to step S8.

At the step S8, the motor drive control part 37 outputs motor drive electric current, determined based on the assist force signal, to the motor 15, thereby the motor 15 applying assist force to the select lever 2, and then the flow ends.

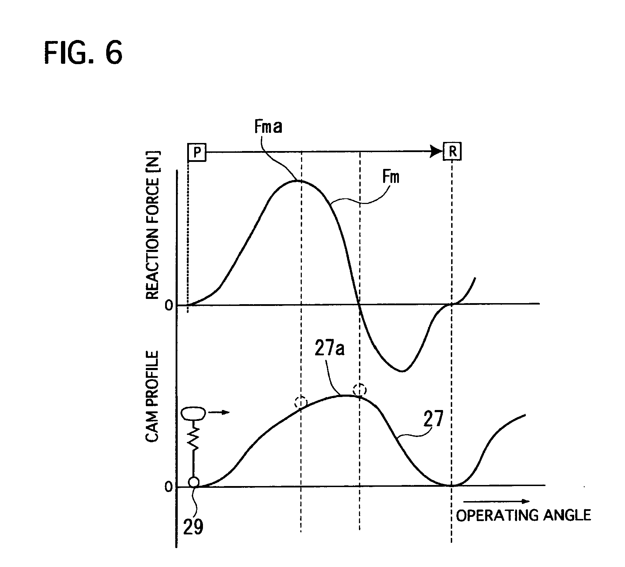

FIG. 6 is a basic target reaction-force table used by the basic target reaction-force setting part 35 and shows characteristic relationships of operating reaction force Fm acting on the select lever 2, and a cam profile of the detent mechanism 350 with respect to the operating angle AOP, respectively, during the select operation from the P position to the R position.

The operating reaction force Fm is calculated by using operating select torque detected by the torque sensor 21 in a case where the motor 15 is not driven in the select operation from the Position to the R position. The reaction force Fm is generated by resultant force from the sum of friction force caused by the first and second cables 8 and 18, inertia force of the motor 15, spring force of the detent mechanism 350, and others.

The reaction force Fm increases in a direction opposite to the operating direction of the lever 2 as a function of the operating angle AOP and reaches its peak Fma before the detent pin 29 reaches the top portion 27a of the cam 270 formed on the detent plate 27 as shown in FIG 6, and then decreases with increasing the angle AOP in this pullback zone.

Specifically, in the pull-back zone, the reaction force Fm acts on the select lever 2 against the operating force inputted by the driver until the neutral position, because the detent plate 27 is biased by the spring force of the spring plate 28 in a direction opposite to the operating direction. The larger the deformation amount of the spring plate 28 becomes in the pull-back zone, the further the select lever 2 moves in the operating direction. Note that the operating force in the opposite direction is affected by not only the deformation amount of the spring plate 28, but also the cam profile. The above-described decrease of the resistance force Fm results from a slight slope of the cam 270.

In the pull-back zone, the operating force inputted from the select lever 2 needs to overcome the reaction force Fm generated by the spring force of the spring plate 28 and the cam profile, in order to move the select lever 2 in the operating direction.

In a neutral position where the detent pin 29 is on the peak of the cam 270, the reaction force Fm acting on the select lever 2 becomes zero due to its cam profile, although the spring plate 28 is deformed to the maximum degree.

After the detent pin 29 passes over the peak, the spring plate 28 starts to reduce its deformation amount until the pin 29 reaches the bottom of the cam 270 corresponding to the R position.

In this pull-in zone, the detent plate 27 is pressed by the spring plate 28 in the operating direction, so that the lever 2 is assisted to move forward by the reaction force Fm. Accordingly, the select lever 2 is propelled by the reaction force Fm, increasing at first and then decreasing, in such a way that the lever 2 is pulled into the bottom portion 27b corresponding to the R position.

Therefore, the operating force to be applied from the select lever 2 needs to be larger than and overcome the reaction force Fm shown in FIG 6 in order to manually move the select lever 2 for an select operation without assist force of the motor 15.

FIG. 7 is a schematic diagram showing a relationship between basic target reaction-force Ftb and an operating angle AOP when the select lever 2 is shifted from the P position to the R position. This basic target-reaction force Ftb is idealistic reaction force and set as shown in FIG 7 so as to bring a favorable operationality to a driver by providing nice click-feeling during the select operation.

When the select lever 2 is moved from the P position to the R position for example, the basic target reaction-force Ftb is set to have a pull-back zone where the basic target resistance-force Ftb acts against the operating direction of the lever 2, indicated by a line over a horizontal axis of the operating angle in FIG 7, a neutral poison on the horizontal axis, and a pull-in zone where the basic target resistance-force Ftb acts in the operating direction, indicated by the line under the horizontal axis. In the pull-back zone and pull-in zone, the basic target reaction-force Ftb increases at first and then decreases, although their acting directions are different from each other.

In the operating position select device 100 of the first embodiment, the assist control is executed so that assist force added from the motor 15 and operating force inputted by a driver overcome the resistance force Fm shown in FIG. 6 and the driver receives the basic target resistance-force Ftb shown in FIG 7.

The assist force is generated under proportional plus integral (PI) feedback control by using the equation of $iFa = kp (rFs - tFs) + ki \int (rFs - tFs) dt$. This control brings the favorable operationality to the driver.

When the driver shifts the select lever 2 from a select position to another select position, there is a possibility that he or she thinks the select lever 2 is completely shifted to a desired select position and stops its select operation, although the lever 2 is actually positioned at an improper position, such as an intermediate position between select positions.

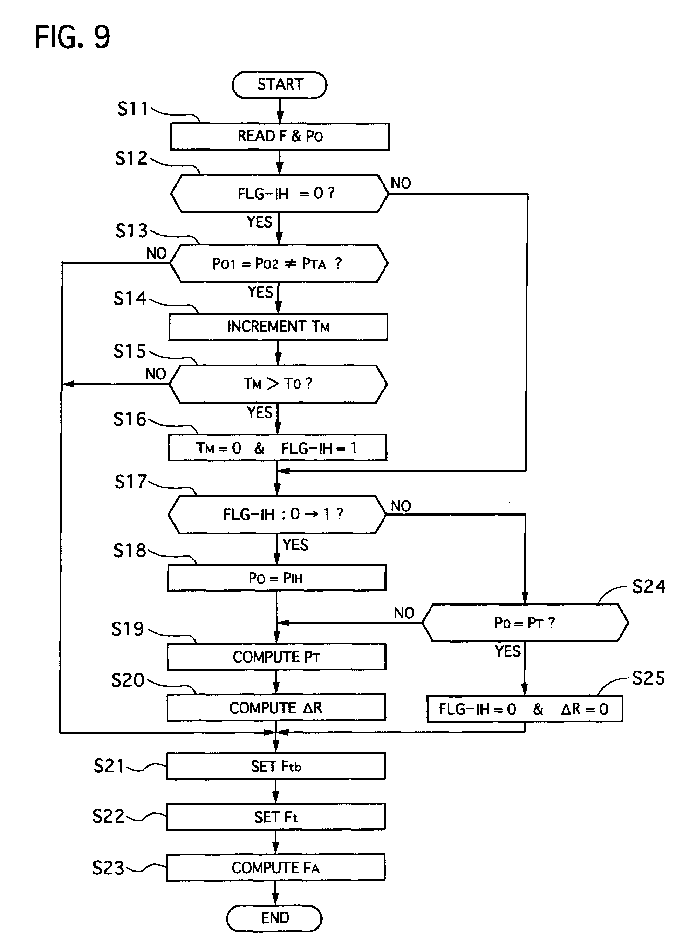

In order to resolve the above improper-halt of the lever 2, a flowchart, shown in FIG 9, of an improper-halt preventing control is executed by the control unit 22 in this embodiment.

At step S11, corresponding to the steps 1 and 2 of FIG 5, the control unit 22 receives the operating angle signal from the operating angle sensor 200 and the operating force signal from the torque sensor 21 d to read the operating position Po (corresponding to an operating angle AOP) and the operating force F, and then the flow goes to step S12.

At the step S12, the improper-halt judging part 33 detects whether or not a flag FLG-IH of an improper halt is OFF (its value being zero for example). If YES, the flow goes to step S 13, while, if NO, it goes to step S 17.

At the step S 13, the judgment part 33 judges whether or not a current operating position $P_{O1}$ of the lever 2 is equal to a last operating position $P_{O2}$ and deviates from a select position $P_{TA}$ (P, R, N, D, or L). If YES, the flow goes to step S 14, while, if NO, it goes to step S21.

At the step S 14, the timer is incremented so that its count time TM becomes zero, and then the flow goes to step S 15.

At the step S15, the judging part 33 judges whether or not the count time $T_M$ of the timer exceeds a predetermined time To. The predetermined time $T_0$ is set to be, for example, a few seconds in this embodiment. If YES the flow goes to step S 16, while, if NO, it goes to step S21.

At the step S16, the timer is cleared and the flag FLG-IH is set ON (its value being one for example), and then the flow goes to step S 17.

At the step S17, the judgment part 33 judges whether or not the last flag FLG-IH is OFF and the current flag FLG-IH is ON. If YES, the flow goes to step S 18, while, if NO, it goes to step S24.

At the step S 18, the an improper-halt position computing part 341 sets the operating position Po to be an improperly halted operating position $P_{IH}$, and then the flow goes to step S 19.

At the step S19, the target select-position computing part 342 sets a target select-position $P_T$ based on the improperly halted operating position $P_{IH}$, with referring to the target select-position table shown in FIG 8, and then the flow goes to step S20.

At the step S20, the reaction compensation-amount computing part 343 computes a reaction compensation-amount $\Delta R$ based on the operating position Po and the target select-position $P_T$, and then the flow goes to step S21.

At the step S21, the basic target reaction-force setting part 35 sets a basic target reaction-force Ftb based on the operating position Po and the target select position $P_T$, and then the flow goes to step S22.

At the step S22, the target reaction-force computing part 36 computes a target reaction-force Ft by adding the basic target-reaction force Ftb and the reaction compensation-amount $\Delta R$ to each other, and then the flow goes to step S23.

At the step S23, the assist-force computing part 37 computes assist force $F_A$ based on the target reaction-force Ft and the operating force F. The motor drive control part 38 receives the assist force signal and outputs motor drive current to drive the motor 15, and the flow ends.

On the other hand, at the step S24, the improper-halt judging part 33 judges whether or not the operating position Po reaches the target select-position $P_T$. If YES, the flow goes to step S25, while, if NO, it goes to the step S19.

At the step S25, the judgment part 33 sets the flag FLG-IH to be zero and clears the target reaction force compensation amount $\Delta F$ to zero.

As understood from the above flowchart, when the select lever 2 is positioned at an improper position, such as an intermediate position between select positions (adjacent two of P, R, N, D, and L) due to a lever-shift halfway operation, the improper-halt judging part 33 judges the improper-halt when the lever 2 is kept halted at the improper position for more than the predetermined period. The improper-halt position computing part 341 holds its improperly halted operating position $P_{IH}$ at time when the improper halt is judged by the improper-halt judging part 33.

Then, the target select-position computing part 342 refers to the target select-position table shown in FIG. 8 based on the improperly halted operating position PIH, and determines a target select-position $P_T$.

FIG 8 shows the target select-position table, which has data on relationship between a target select-position $P_T$ and an improperly halted operating position $P_{IH}$. In the table, a data value is set larger as the select position shifts from the position P to the position L. A target select-position is determined, for example in this embodiment, such that it is set to be a select position near to the select mode position P of the adjacent select mode positions between which the lever 2 is halted when the improperly halted operating position $P_{IH}$ is less than a half angle between adjacent select mode positions, while it is set to be a select position near to the position L thereof when the position $P_{IH}$ is equal to or more than the half angle.

After the target select-position is determined, the reaction compensation-amount computing part 343 computes a reaction compensation-amount R so that a difference between the target select position and the operation position Po is reduced to zero. This reaction compensation-amount ($\Delta R$) value tFs_h is computed by the equation of tFs_h = kp2 (rPm - tPm) + ki2 ∫ (rPm - tPm) dt, where rPm is an improperly halted operating position ($P_{IH}$) value, tPm is a target select position ($P_T$) value, kp2 is a proportional gain and kj2 is an integral gain.

Then, the target reaction-force computing part 36 adds a basic target reaction force Ftb obtained from the basic target reaction-force setting part 35 and the compensation-amount $\Delta R$ obtained from the target reaction-force computing part 36 to each other so as to obtain a target reaction-force Ft.

The target assist-force computing part 37 computes an assist force $F_A$ based on an inputted operating force F and the target reaction force $P_T$.

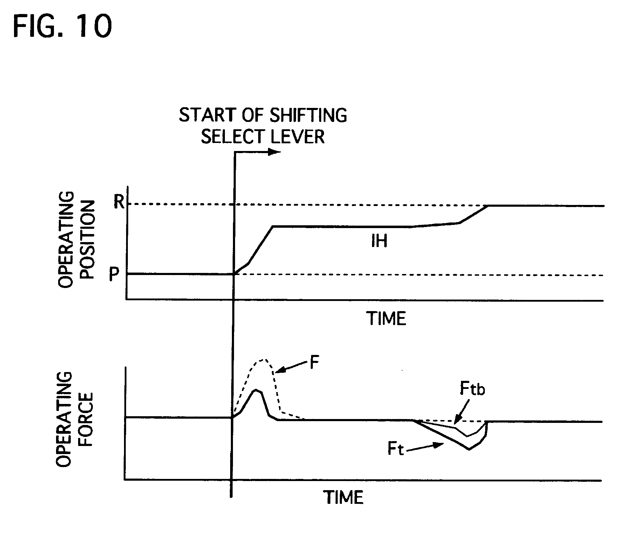

FIG 10 shows an example of improper-halt preventing control executed when the lever 2 is halted improperly between the select positions P and R during a select operation from the position P to the position R.

As shown in FIG. 10, when the select lever 2 starts to shift from the position P to the position R by a driver's operation as shown in the upper part of FIG 10, the target reaction-force Ft, indicated a heavy full in the lower part of FIG 10, increases and then decreases when the lever 2 is moved by operating force F of a driver and assist force of the assist actuator 9, where the operating force F, indicated by a dashed line, also increases and then decreases similarly to the target reaction-force Ft, but with larger values than the target reaction-force Ft.

However, in this case, the driver stops shifting the lever 2 for the predetermined period before reaching the position R as shown in the upper part of FIG 10, causing the improper-halt judging part 33 to judge an improper-halt of the lever 2. The improper-halt operating position computing part 341 holds an improperly halted operating position $P_{IH}$.

Then, the target select-position computing part 342 determines that a target operation position $P_T$ is set to be the position R, because the operating position $P_{IH}$ exceeds a half angle between the positions P and R.

Note that the target reaction-force Ft is reduced in order to prevent this improper-halt in this embodiment. Specifically, the basic target reaction force setting part 35 sets a basic target reaction-force Ftb, and the target reaction force-computing part 36 computes a target reaction-force Ft as shown in the lower part of FIG 10, and thereby the assist actuator 9 applies its assist force to the lever 2 so as to move it surely to the position R, as shown in the lower part of FIG 10, although the driver does not apply operating force to the lever 2. This assist control gives the driver a feeling that the lever 2 is moved to the position R due to its inertia.

This operating position select device 100 of the first embodiment has many advantages described below.

The select lever 2 can be shorter than a conventional one by approximately 150 mm at its portion projecting from a center console toward a passenger compartment without increasing an operating force applied to the select lever 2 so much. This brings a design freedom concerning an installation location of the select lever and/or a layout of a passenger compartment to be broadened.

When operating the select lever 2, assist torque from the electric motor 15 is applied to the coupling shaft 12 of the mechanically connecting mechanism so as to reduce the operating force applied to the select lever 2. When the operating position select unit 100 fails electrically, a driver can shift the mode shift unit 300 by operating the select lever 2 because the select lever 2 and the mode shift unit 300 are mechanically connected by the mechanically connecting mechanism, such as the first and second control cables 8 and 18 and the others.

When a driver stops shifting the lever 2 at an improper position for the predetermined period, the assist actuator 9 can move it to a select mode position so as to prevent it from being positioned at the improper position between select mode positions.

The target select-position computing part 342 determines a target select-position based on the improperly halted operating position $P_{IH}$ and the assist actuator 9 applies its assist force to the lever 2, which can ensure the lever 2 to move in a select direction where there is a select position most like the driver's desired select position.

When the select lever 2 is halted improperly, it is moved by the actuator 9 based on an assist force signal determined based on operating force F and a target reaction-force Ft, where the target reaction-force Ft is computed based on a basic target reaction-force Ftb and a reaction compensation-amount ΔR obtained by a target select position PT and an operating position PO (corresponding to an operating angle AOP) of the lever 2, which enables the lever 2 to approach the driver's desired select position.

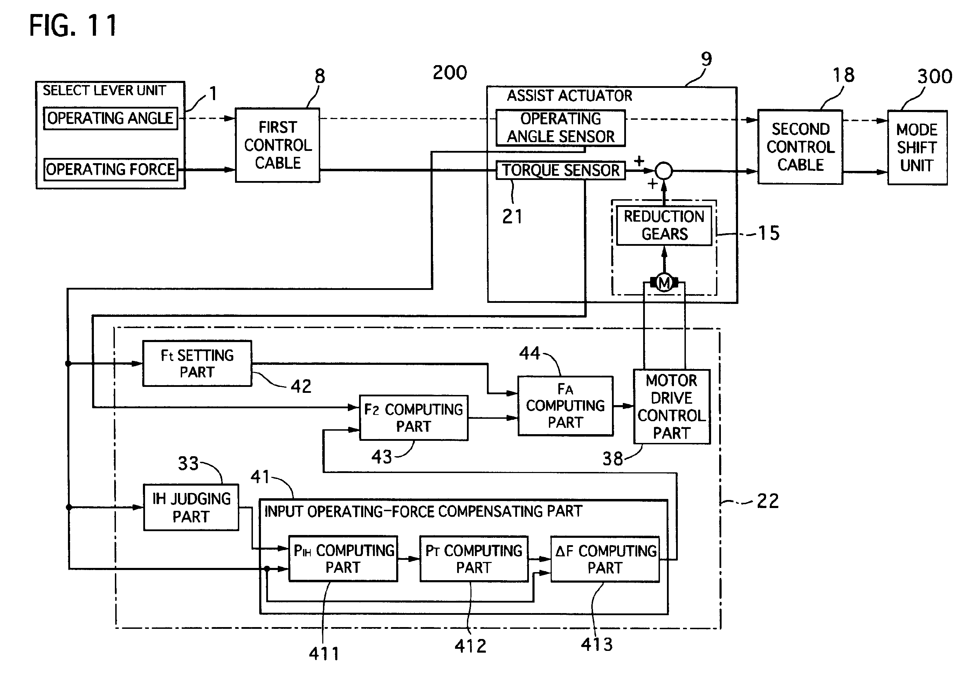

Next, an operating position select device of a second embodiment according to the present invention will be described with reference to the accompanying drawings of FIGS. 11 to 14.

This operating position select device is constructed similarly to that of the first embodiment shown in FIGS. 1 to 4 except a control unit 22. The control unit 22 of the second embodiment lacks the basic target reaction-force setting part 35, the target reaction-force computing part 36, and the target reaction-force compensating part 34 of the first embodiment, while it has an input operating-force compensating part 41, a target reaction-force setting part 42, and a second operating-force computing part 43.

The input operating force-compensating part 41 includes an improper-position computing part 411, a target select-position computing part 412, and an operating-force compensation-amount computing part 413.

The improper-halt position computing part 411 is electrically connected to an improper-halt judging part 33 and an operating angle sensor 200 to receive an improper-halt signal and an operating angle signal, respectively. The position computing part 411 computes an improperly halted operating position $P_{IH}$ obtained when an improper-halt of a select lever is judged by the improper-halt judging part 33, and outputs an improperly halted operating position signal.

The target select position computing part 412 receives the improperly halted operating position signal from the improper-halt position computing part 441 and determines a target select-position $P_T$ by using a target select-position table shown in FIG. 8 to output a target select-position signal.

The operating-force compensation-amount computing part 413 receives the target select position signal from the target select position computing part 412 and the operating angle signal from the operating angle sensor 200 and computes an operating-force compensation-amount ΔF for reducing a difference between the target select position and the operating position, corresponding to an operating angle obtained by the operating angle sensor 200, to output an operating-force compensation-amount signal. The operating-force compensation-amount (ΔF) value rFs_h is calculated by an equation of rFs_h = kp3 (tPm - rPm) + Ki3 ∫ (tPm - rPm) dt, where rPm is an improper-halt position (PIH) value, tPm is a target select position (PT) value, kp3 is a proportional gain, and Ki3 is an integral gain.

The target reaction-force setting part 42 is electrically connected to the operating angle sensor 200 to receive an operating angle signal and set a target reaction-force Ft, outputting a target reaction-force signal. The target reaction-force setting part 42 of the second embodiment corresponds to the basic target reaction-force setting part 35 of the first embodiment, and uses a target reaction-force table similar to the basic target reaction-force table of FIG. 7. Note that in the second embodiment the target reaction-force is not compensated such as that of the first embodiment.

The second operating-force computing part 43 is electrically connected to a torque sensor 21 and the operating-force compensation-amount computing part 413 to receive an operating force signal and the operating-force compensation-amount signal, respectively, and compute second inputted operating-force, outputting a second operating-force signal to an assist force computing part 44.

The assist force computing part 44 is electrically connected to the target reaction-force setting part 42 and the second operating-force computing part 43 to receive the target reaction-force signal and the second operating-force signal, respectively, and compute assist force, outputting an assist force signal to a motor drive control part 38.

The other parts of the operating position select device of the second embodiment are similar to those of the first embodiment.

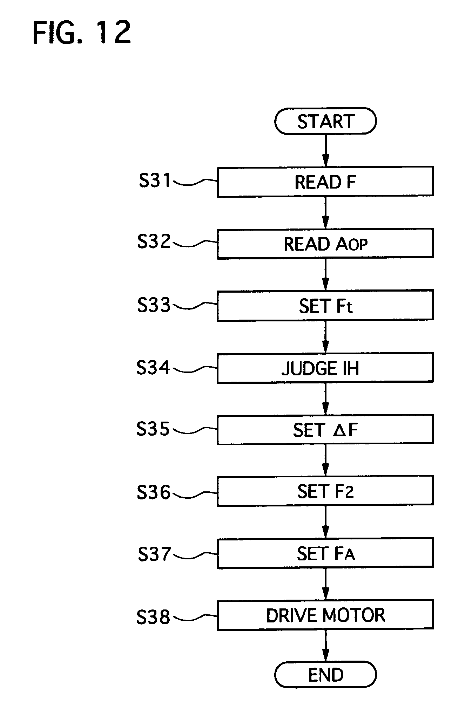

FIG 12 is a flowchart of the assist control executed by the control unit 22 in order to control the assist actuator 9 when the select lever is operated by a driver.

At step S31, the assist force part 37 receives an operating force signal from the torque sensor 21 to read operating force F, and then the flow goes to step S32.

At the step S32, the improper-halt judging part 33, the target operating-force compensating part 41, and the target operating-force setting part 42 receives an operating angle signal from the operating angle sensor 200 to read an operating angle AOP. Then, the flow goes to step 33.

At the step S33, the target reaction-force setting part 42 sets a target reaction-force Ft based on the operating angle AOP and outputs a target reaction-force signal to the assist-force computing part 44. Then, the flow goes to step S34.

At the step S34, the improper-halt judging part 33 receives the operating angle signal and judges an improper-halt of the select lever based on the operating angle and time counted by a not-shown timer, similarly to the first embodiment, to output an improper-halt signal when the judging part 33 detects the improper-halt. Then, the flow goes to step S35.

At the step S35, the input operating-force compensating part 41 receives the improper-halt signal from the improper-halt judgment part 33 and the operating angle signal from the operating angle sensor 200 and sets an operating-force compensation-amount $\Delta F$, outputting an operating-force compensation-amount signal. Then, the flow goes to step S36.

At the step S36, the second operating-force computing part 43 receives operating force signal from the torque sensor 21 and the operating-force compensation-amount signal from the operating-force compensation-amount computing part 413 and sets a second operating-force $F_2$, outputting a second operating-force signal. Then, the flow goes to step S37.

At the step S37, the assist force computing part 44 receives a target reaction-force signal from the target reaction-force setting part 42 and the second operating-force signal from the second operating-force computing part 413 and sets an assist force $F_A$, outputting an assist force signal. Then, the flow goes to step S38.

At the step S38, the motor drive control part 37 outputs motor drive electric current, determined based on the assist force signal, to the motor 15, thereby the motor 15 applying assist force to the select lever, and then the flow ends.

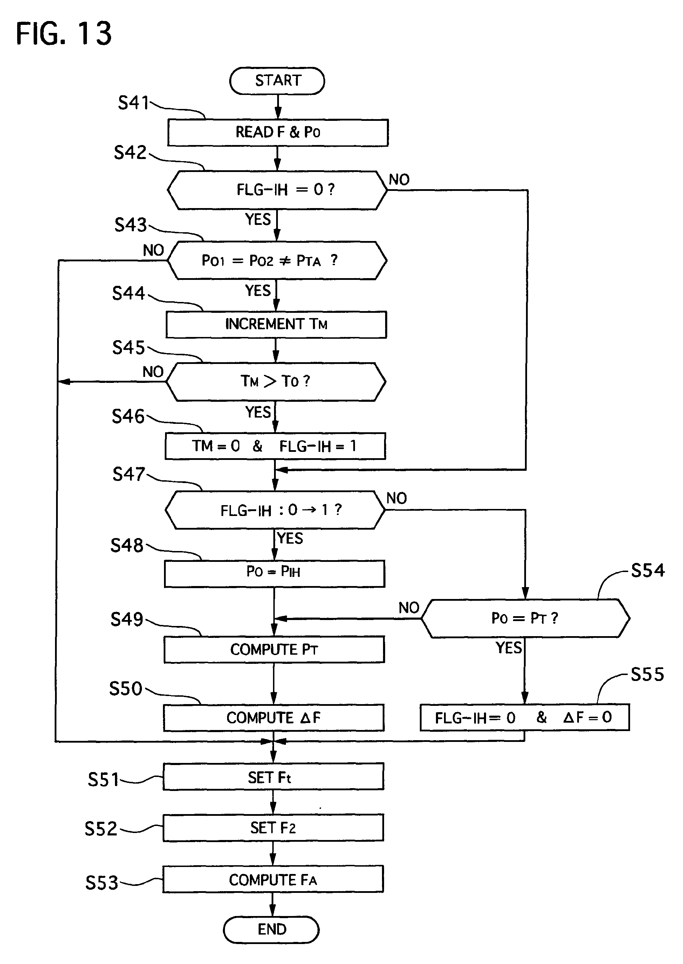

FIG 13 is a flowchart of an improper halt preventing control executed in the control unit 22.

At step S41, corresponding to the steps 31 and 32 of FIG 12, the control unit 22 receives the operating angle signal from the operating angle sensor 200 and the operating force signal from the torque sensor 21 to read the operating position Po (corresponding to an operating angle $A_{OP}$) and the operating force F, and then the flow goes to step S42.

At the step S 42, the improper-halt judging part 33 detects whether or not an improper-halt flag FLG-IH is OFF (its value being zero for example). If YES, the flow goes to step S43, while, if NO, it goes to step S47.

At the step S43, the judgment part 33 judges whether or not a current operating position $P_{O1}$ of the lever is equal to a last operating position $P_{O2}$ and deviates from a select position $P_{TA}$ (P, R, N, D, or L). If YES, the flow goes to step S44, while, if NO, it goes to step S51.

At the step S44, the timer is incremented so that its count time $T_M$ becomes zero, and then the flow goes to step S45.

At the step S45, the judging part 33 judges whether or not the count time $T_M$ of the timer exceeds a predetermined time To. The predetermined time $T_0$ is set to be, for example, a few seconds in this embodiment. If YES the flow goes to step S46, while, if NO, it goes to step S51.

At the step S46, the timer is cleared and the flag FLG-IH is set ON (its value being one for example), and then the flow goes to step S47.

At the step S47, the judgment part 33 judges whether or not the last flag FLG-IH is OFF and the current flag FLG-IH is ON. If YES, the flow goes to step S48, while, if NO, it goes to step S54.

At the step S48, the an improper-halt position computing part 411 sets an operating position PO to be an improperly halted operating position $P_{IH}$, and then the flow goes to step S49.

At the step S49, the target select-position computing part 412 sets a target select-position $P_T$, and then the flow goes to step S50. The target select position $P_T$ is set based on the improperly halted operating position $P_{IH}$ with referring to a target select-position table shown in FIG 8 similarly to the first embodiment.

At the step S50, the operating-force compensation-amount computing part 413 computes an operating-force compensation-amount $\Delta F$ based on the target select position $P_T$ and the operating position Po, and then the flow goes to step S51.

At the step S51, the target reaction-force setting part 42 sets target reaction-force Ft based on the operating position Po and then the flow goes to step S52.

At the step S52, the second operating-force setting part 43 sets a second operating-force $F_2$ based on the operating force F and the operating-force compensation-amount $\Delta F$ and outputs a second operating-force signal, and then the flow goes to step S53,

At the step S53, the assist force computing part 44 computes assist force $F_A$ based on the target reaction-force Ft and the second operating-force $F_2$ and outputs an assist force signal. The motor drive control part 38 receives the assist force signal and outputs motor drive current to drive the motor 15, and the flow ends.

At the step S54, the improper-halt judging part 33 judges whether or not the operating position PO reaches the target select position PT. If YES, the flow goes to step S55, while, if NO, it goes to the step S49.

At the step S55, the judgment part 33 sets the flag FLG-IH to be OFF and clears the target operating-force compensation-amount $\Delta F$ to zero.

In this second embodiment, when the improper-halt judging part 33 judges an improper-halt, the operating-force compensating part 413 computes an operating-force compensation-amount $\Delta F$ capable of reducing a difference between a target select position and an operating position of the select lever.

This compensation-amount $\Delta F$ is added to the operating force F by the second operating-force computing part 43, and its additional value is outputted as second operating-force to the assist force computing part 44. The computing part 44 computes assist force based on a difference between the second operating force $F_2$ and the target reaction force Ft and outputs an assist force signal to the motor drive control part 38.

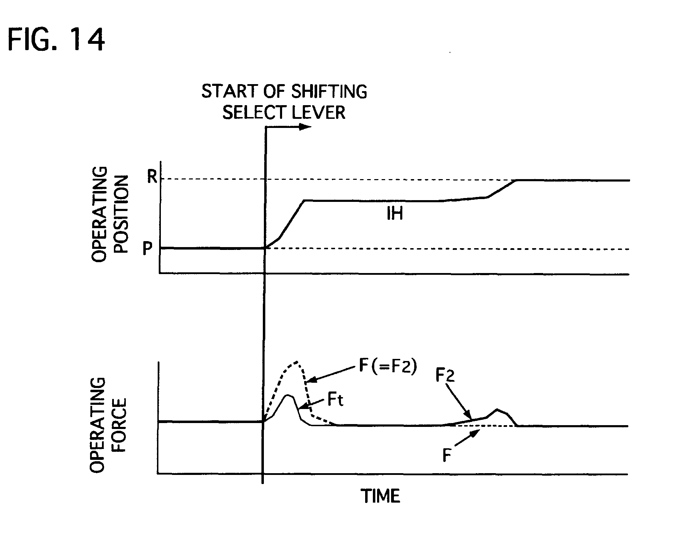

FIG 14 shows an example of improper-halt preventing control executed when the lever is halted improperly between the positions P and R during a select operation from the position P to the position R.

As shown in FIG. 14, when the select lever starts to shift from the position P to the position R by a driver's operation as shown in the upper part of FIG 14, the target reaction-force Ft, indicated a light full in the lower part of FIG 14, increases and then decreases when the lever is moved by operating force F of a driver and assist force of the assist actuator 9, where the operating force F, indicated by a dashed line, also increases and then decreases similarly to the target reaction-force Ft, but with larger values than the target reaction-force Ft. When the lever moves, the operating force becomes equal to the second operating-force, because the operating-force compensation-amount $\Delta F$ is zero.

However, in this case, the driver stops shifting the lever for the predetermined period before reaching the position R as shown in the upper part of FIG 14, causing the improper-halt judging part 33 to judge an improper-halt. The improper-halt operating position computing part 411 holds an improperly halted operating position PIH. Then, the target select-position computing part 412 determines that a target operation position $P_T$ is set to be the position R, because the operating position $P_{IH}$ exceeds a half angle between the positions P and R.

Note that the second operating-force $F_2$ is increased in order to prevent this improper-halt in this embodiment. Specifically, the operating-force compensation-amount computing part 413 computes an operating-force compensation-amount $\Delta F$ for adding it to the operating force F as shown in the lower part of FIG. 14. Accordingly, the assist actuator 9 applies its assist force to the lever so as to move it surely to the position R, although the driver does not apply operating force to the lever. This assist control gives the driver a feeling that the lever is moved to the position R due to its inertia.

The advantages of the operating position select device of the second embodiment will be described.

The select lever can be shorter than a conventional one by approximately 150 mm at its portion projecting from a center console toward a passenger compartment without increasing an operating force applied to the select lever so much. This brings a design freedom concerning an installation location of the select lever and/or a layout of a passenger compartment to be broadened.

When operating the select lever, assist torque from an electric motor 15 is applied to a mechanically connecting mechanism so as to reduce the operating force applied to the select lever. When the operating position select unit fails electrically, a driver can shift a mode shift unit 300 by operating the select lever because the select lever and the mode shift unit 300 are mechanically connected by the mechanically connecting mechanism, such as first and second control cables 8 and 18 and the others.

The target select-position computing part 412 determines a target select-position based on the improperly halted operating position $P_{IH}$ and the assist actuator 9 applies its assist force to the lever, which can ensure the lever to move in a select direction where there is a select position most like the driver's desired select position.

When the select lever is halted improperly, it is moved by the actuator 9 based on an assist force signal determined based on a target reaction-force Ft and a second operating-force $F_2$, where the second operating-force $F_2$ is computed based on operating force F and an operating-force compensation-amount $\Delta F$ obtained by a target select position $P_T$ and an operating position Po (corresponding to an operating angle AOP) of the lever. Therefore, the select lever can be controlled to approach the driver's desired select position.

While there have been particularly shown and described with reference to preferred embodiments thereof, it will be understood that various modifications may be made therein, and it is intended to cover in the appended claims all such modifications as fall within the true spirit and scope of the invention.

For example, the operating force F may be detected based on an estimate from supply current to the motor 15 and its rotational speed in stead of using the torque sensor 21.

The operating position can be detected by the displacement amount of the select lever 2 or the mechanically connecting mechanism 400 that connects the select lever 2 and the mode shift unit 300 with each other instead of the operating angle of the select lever 2.

The mechanically connecting mechanism may be rods or linkage instead of the first and second control cables 8 and 18 in the above embodiments. The select lever may be of a shape different from the above embodiments.

The select lever 2 may have a configuration different from that of the first embodiment shown in FIG 1, for example, a finger- controable one.

The configuration of the cam of the detent mechanism may be formed arbitrarily to have different target reaction force.

**Claims**

1. An operating position select device (100) for an automatic transmission (19) whose operation modes are shiftable, **characterized in that** the operating position select device (100) comprises:

   a select lever unit (1) having a select lever (2) that is operated by a driver between a plurality of select positions corresponding to the operation modes;
   an operating position sensor (200) that detects an operating position of the select lever (2) and outputs an operating position signal;
   an operating force sensor (21) that detects operating force applied to the select lever (2) and outputs an operating force signal;
   a mode shift unit (300) mounted on the automatic transmission (19) to shift operation modes of the automatic transmission (19);
   a mechanically connecting means (8, 10, 12, 13, 18) that mechanically connects the select lever (2) and said mode shift unit (300) with each other;
   an assist actuator (9) that is arranged between the select lever (2) and said mode shift unit (300) and supplies assist force to the shift lever (2); and
   a control unit (22) that controls said assist actuator (9), said control unit (22) including an improper-halt judging part (33) that judges an improper halt of the select lever (2) between the adjacent select positions based on the operating position signal and outputs an improper-halt signal, a basic target reaction-force setting part (35) that sets a basic target reaction-force based on the operating position signal and outputs a basic target reaction-force signal, a target reaction-force compensating part (34) that computes a reaction-force compensation-amount based on the improper-halt signal and the operating position signal and outputs a reaction-force compensation-amount signal, a target reaction-force computing part (36) that computes a target reaction-force based on the basic target reaction-force signal and the reaction-force compensation-amount signal and outputs a target reaction-force signal, and an assist force computing part (37) that computes an assist force of said assist actuator (9) based on the target reaction-force signal and the operating force signal.

2. An operating position select device (100) for an automatic transmission (19) according to claim 1, **characterized in that**
   said target reaction-force compensating part (34) has an improper-halt position computing part (341) that computes an improperly halted operating position, where the select lever (2) is improperly halted, based on the improper-halt signal and the operating position signal and outputs an improperly halted operating position signal,
   a target select-position computing part (342) that computes a target select-position based on the improperly halted operating position signal and outputs a target select-position signal, and
   a reaction-force compensation-amount computing part (343) that computes a reaction-force compensation-amount based on the operating position signal and the target select-position signal.

3. An operating position select device (100) for an automatic transmission (19) according to claim 2, **characterized in that**
   the target select-position computing part (342) is provided with a target select-position table having data on a relationship between the target select-position and the improperly halted operating position.

4. An operating position select device (100) for an automatic transmission (19) according to anyone of claims 1 to 3, **characterized in that**
the basic target reaction-force setting part (35) is provided with a basic target reaction-force table having data on a relationship between the basic target reaction-force and the operating position.

5.  An operating position select device (100) for an automatic transmission (19) whose operation modes are shiftable, **characterized in that** the operating position select device (100) comprises:

a select lever unit (1) having a select lever (2) that is operated by a driver between a plurality of select positions corresponding to the operation modes;
an operating position sensor (200) that detects an operating position of the select lever (2) and outputs an operating position signal;
an operating force sensor (21) that detects operating force applied to the select lever (2) and outputs an operating force signal;
a mode shift unit (300) mounted on the automatic transmission (19) to shift operation modes of the automatic transmission (19);
a mechanically connecting means (8, 10, 12, 13, 18) that mechanically connects the select lever (2) and said mode shift unit (300) with each other;
an assist actuator (9) that is arranged between the select lever (2) and said mode shift unit (300) and supplies assist force to the shift lever (2); and
a control unit (22) that controls said assist actuator (9), said control unit (22) including an improper-halt judging part (33) that judges an improper halt of the select lever (2) between the adjacent select positions based on the operating position signal and outputs an improper-halt signal, an input operating-force compensating part (41) that computes an operating-force compensation-amount based on the improper-halt signal and the operating position signal and outputs an operating-force compensation-amount signal, a second operating-force computing part (43) that computes a second operating-force based on the operating force signal and the operating-force compensation-amount signal and outputs a second operating-force signal, and an assist force computing part (44) that computes an assist force of said assist actuator (9) based on the target reaction-force signal and the second operating-force signal.

6.  An operating position select device (100) for an automatic transmission (19) according to claim 5, **characterized in that**
said target reaction-force compensating part (41) has an improper-halt position computing part (411) that computes an improperly halted operating position, where the select lever (2) is improperly halted, based on the improper-halt signal and the operating position signal and outputs an improperly halted operating position signal,
a target select-position computing part (412) that computes a target select-position based on the improperly halted operating position signal and outputs a target select-position signal, and
an operating-force compensation-amount computing part (413) that computes a operating-force compensation-amount based on the operating position signal and the target select-position signal.

7.  An operating position select device (100) for an automatic transmission (19) according to claim 6, **characterized in that**
the target select-position computing part (412) is provided with a target select-position table having data on a relationship between the target select-position and the improperly halted operating position.

8.  An operating position select device (100) for an automatic transmission (19) according to anyone of claims 5 to 7, **characterized in that**
the target reaction-force setting part (42) is provided with a target reaction-force table having data on a relationship between the target reaction-force and the operating position.

FIG. 1

FIG. 2

FIG. 3

# FIG. 4

EP 1 617 107 A2

## FIG. 5

```
              ( START )
                 │
                 ▼
S1 ──── [    READ F    ]
                 │
                 ▼
S2 ──── [   READ Aop   ]
                 │
                 ▼
S3 ──── [   SET Ftb    ]
                 │
                 ▼
S4 ──── [   JUDGE IH   ]
                 │
                 ▼
S5 ──── [   SET ΔR     ]
                 │
                 ▼
S6 ──── [   SET Ft     ]
                 │
                 ▼
S7 ──── [   SET FA     ]
                 │
                 ▼
S8 ──── [ DRIVE MOTOR  ]
                 │
                 ▼
              ( END )
```

# FIG. 6

# FIG. 9

START

S11 — READ F & $P_O$

S12 — FLG-IH = 0 ? —NO→

YES ↓

S13 — $P_{O1} = P_{O2} \neq P_{TA}$ ? —NO (loop back)

YES ↓

S14 — INCREMENT $T_M$

S15 — $T_M > T_O$ ? —NO (loop back)

YES ↓

S16 — $T_M = 0$ & FLG-IH = 1

S17 — FLG-IH : 0 → 1 ? —NO→

YES ↓

S18 — $P_O = P_{IH}$

S24 — $P_O = P_T$ ? —NO→

YES ↓

S25 — FLG-IH = 0 & $\Delta R = 0$

S19 — COMPUTE $P_T$

S20 — COMPUTE $\Delta R$

S21 — SET $F_{tb}$

S22 — SET $F_t$

S23 — COMPUTE $F_A$

END

# FIG. 10

START OF SHIFTING
SELECT LEVER

OPERATING POSITION

R

IH

P

TIME

OPERATING FORCE

F

Ftb

Ft

TIME

# FIG. 11

# FIG. 12

```
                    ┌─────────────┐
                    │    START    │
                    └──────┬──────┘
                           │
                           ▼
S31 ────────────┌───────────────────┐
                │      READ F        │
                └─────────┬─────────┘
                          │
                          ▼
S32 ────────────┌───────────────────┐
                │     READ AOP       │
                └─────────┬─────────┘
                          │
                          ▼
S33 ────────────┌───────────────────┐
                │      SET Ft        │
                └─────────┬─────────┘
                          │
                          ▼
S34 ────────────┌───────────────────┐
                │     JUDGE IH       │
                └─────────┬─────────┘
                          │
                          ▼
S35 ────────────┌───────────────────┐
                │      SET ΔF        │
                └─────────┬─────────┘
                          │
                          ▼
S36 ────────────┌───────────────────┐
                │      SET F2        │
                └─────────┬─────────┘
                          │
                          ▼
S37 ────────────┌───────────────────┐
                │      SET FA        │
                └─────────┬─────────┘
                          │
                          ▼
S38 ────────────┌───────────────────┐
                │    DRIVE MOTOR     │
                └─────────┬─────────┘
                          │
                          ▼
                    ┌─────────────┐
                    │     END     │
                    └─────────────┘
```

# FIG. 13

```
                    ┌─────────────┐
                    │    START    │
                    └─────────────┘
                           │
S41 ──────────    ┌─────────────────┐
                  │   READ F & Po   │
                  └─────────────────┘
                           │
S42 ──────────   ╱─────────────────╲   NO
                 ╲   FLG-IH = 0 ?   ╱ ──────────┐
                    │ YES                        │
S43 ──── NO   ╱───────────────────╲              │
         ┌────╲  Po1 = Po2 ≠ PTA ? ╱             │
         │       │ YES                           │
S44 ──   │    ┌─────────────────┐                │
         │    │  INCREMENT TM   │                │
         │    └─────────────────┘                │
         │       │                               │
S45 ──   │ NO ╱───────────────╲                  │
         │◄───╲    TM > To ?   ╱                  │
         │       │ YES                            │
S46 ──   │    ┌───────────────────────┐          │
         │    │ TM = 0  &  FLG-IH = 1 │          │
         │    └───────────────────────┘          │
         │             │◄──────────────────────────┘
S47 ──   │    ╱───────────────────╲   NO
         │    ╲  FLG-IH : 0→1 ?    ╱ ──────────┐
         │       │ YES                         │
S48 ──   │    ┌─────────────┐                  │
         │    │  Po = PIH   │        S54 ──    │
         │    └─────────────┘                  │
         │       │              NO  ╱─────────────╲
S49 ──   │    ┌─────────────┐  ┌───╲  Po = PT ?   ╱
         │    │ COMPUTE PT  │  │      │ YES
         │    └─────────────┘  │   S55 ──
S50 ──   │    ┌─────────────┐  │  ┌──────────────────────┐
         └───►│ COMPUTE ΔF  │  │  │ FLG-IH = 0  &  ΔF = 0│
              └─────────────┘  │  └──────────────────────┘
                     │◄────────────────────┘
S51 ──        ┌─────────────┐
              │   SET Ft    │
              └─────────────┘
S52 ──        ┌─────────────┐
              │   SET F2    │
              └─────────────┘
S53 ──        ┌─────────────┐
              │ COMPUTE FA  │
              └─────────────┘
                     │
              ┌─────────────┐
              │     END     │
              └─────────────┘
```

FIG. 14

START OF SHIFTING
SELECT LEVER

OPERATING POSITION

R

P

IH

OPERATING FORCE

F(=F2)   F2

Ft

F

TIME